# EUROPEAN PATENT APPLICATION

(11) **EP 1 681 580 A2**
(43) Date of publication of application: **19.07.2006**
(21) Application number: 06250111.9
(22) Date of filing: 10.01.2006
(51) Int. Cl.: G01S 13/04, G01S 13/93

(54) **Parking aid apparatus**

(30) Priority: 13.01.2005 HK 05100265
(71) Applicant: Hutchison International Ports Enterprises Limited, Roadtown Tortola (VG)
(72) Inventor: Lee, Sui Keung, Hong Kong International Terminals, Kwai Chung, Hong Kong (HK)
(74) Representative: Jenkins, Richard Gavin

(57) **Abstract**

Parking aid apparatus (100) for aiding parking of a vehicle (10) at a desired parking position, comprises two detectors (200) for use at locations adjacent the parking position and spaced apart for a relatively small distance in the direction of movement of the vehicle (10). Each detector (200) detects crossing by a part (21) of or on the vehicle (10) in a contactless manner. The apparatus (100) includes an indicator (300) associated with the detectors (200) for providing a stop signal to the driver for stopping the vehicle (10) in response to only one of the two detectors (200) detecting crossing of the vehicle part (21).

## Description

The present invention relates to parking aid apparatus for aiding parking of vehicles at a desired position.

### BACKGROUND OF THE INVENTION

The invention is concerned particularly, but not exclusively, with parking of a container or semi-trailer truck at a container terminal/port relative to a gantry crane so that its trailer or the container thereon is more or less aligned with the load block for loading or unloading of containers. Such parking has traditionally been done manually, which is not time efficient at least.

The invention seeks to mitigate or at least alleviate such shortcomings by providing parking aid apparatus.

### SUMMARY OF THE INVENTION

According to the invention, there is provided parking aid apparatus for aiding parking of a vehicle at a desired parking position, comprising first and second detectors for use at locations adjacent said parking position and spaced apart for a relatively small distance in the direction of movement of said vehicle. Each detector is adapted to detect crossing by a part of or on said vehicle in a contactless manner. The apparatus includes an indicator associated with the detectors for providing a stop signal to a driver of said vehicle for stopping said vehicle in response to only one of the two detectors detecting crossing of the part of said vehicle.

In a preferred embodiment, at least one of the detectors comprises an emitter for emitting radiation across said parking position and a sensor for receiving the radiation to sense variation therein caused by the part of said vehicle crossing and intercepting the radiation.

More preferably, the sensor is located adjacent the detector for receiving the radiation intercepted and reflected back by said vehicle part.

It is preferred that the first detector is located upstream of the second detector in the direction of movement of said vehicle, and the indicator is adapted to provide the stop signal when the first detector detects crossing of a forward part of said vehicle and the second detector detects no crossing of said forward part.

It is preferred that the indicator is adapted to provide a go signal to said driver for driving said vehicle to said parking position when both the first and the second detectors detect no crossing of said vehicle part.

It is preferred that the indicator is adapted to provide a reverse signal to said driver for driving said vehicle back to said parking position when both the first and the second detectors detect crossing of said vehicle part.

Preferably, the or each signal provided by the indicator is visual.

More preferably, the indicator comprises a or a separate light to provide the or each signal.

It is preferred that the indicator is adapted to provide a go signal to said driver for driving said vehicle to said parking position when both the first and the second detectors detect no crossing of said vehicle part, and a reverse signal to said driver for driving said vehicle back to said parking position when both the first and the second detectors detect crossing of said vehicle part, and wherein the indicator comprises a series of lights to provide the go, stop and reverse signals respectively.

Preferably, the detectors are located by a single support.

In a specific construction, the parking aid apparatus includes a body having a top part locating the detectors, a middle part locating the indicator and a base part for holding a battery for powering the detectors and the indicator.

Preferably, the base part includes a plurality of rollers or wheels to facilitate movement of the overall apparatus to said parking position.

Preferably, the top part is adjustable in height relative to the base part.

### BRIEF DESCRIPTION OF DRAWINGS

The invention will now be more particularly described, by way of example only, with reference to the accompanying drawings, in which:
Figure 1 is a front view of an embodiment of parking aid apparatus in accordance with the invention;
Figure 2 is a side view of the apparatus of Figure 1;
Figure 3 is a rear view of the apparatus of Figure 1;
Figures 4A to 4C are schematic views illustrating the operating principle of the parking aid apparatus of Figure 1;
Figures 5A to 5C are schematic views illustrating the use of the parking aid apparatus of Figure 1 for a container truck relative to the bottom of a leg of a gantry crane; and
Figures 6A to 6C are schematic views illustrating the use of the parking aid apparatus of Figure 1 for a container truck relative to a load block of a gantry crane.

### DETAILED DESCRIPTION OF PREFERRED EMBODIMENT

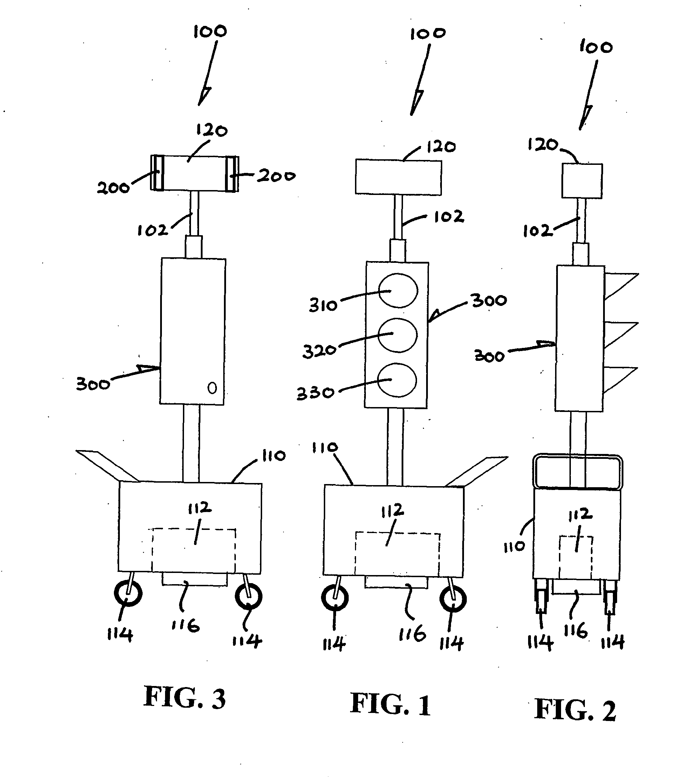

Referring initially to Figures 1 to 3 of the drawings, there is shown parking aid apparatus 100 embodying the invention for aiding parking of a container truck 10 (or semi-trailer truck) at a container port/terminal for example, at a desired or appropriate position underneath a gantry crane for unloading (or loading) a container 20 carried by the truck 10. For this purpose, the parking position should fit the container 20 or be determined relative thereto.

The subject apparatus 100 is an upright structure which comprises a cuboidal base cabinet 110 holding therein a 12V rechargeable battery pack 112, a post 102 upstanding from the cabinet 110, an oblong box 120 mounted horizontally across the top end of the post 102 in which there is located/supported a pair of detectors 200, and an indicator 300 mounted on a middle section of the post 102.

The battery pack 112 supplies electrical power to the detectors 200 and the indicator 300, whilst it conveniently acts as a weight to ensure that the apparatus 100 stands stably upright. The base cabinet 110 are fitted with four rollers or wheels 114 at its bottom corners such that the overall apparatus 100 can easily and conveniently be moved around, and in particular to the aforesaid parking position, adjacent and by the side thereof, for operation. There is a pallet channel 116 on the bottom of the cabinet 110 to facilitate handling by a forklift for transportation.

The upper section of the post 102 between the detector box 120 and the indicator 300 has a telescope-like construction (i.e. a tube in another tube) such that it can be extended and retracted to adjust the height of the detectors 200 in the range from 155cm to 185cm from the ground (relative to the base cabinet 110). The two detectors 200 are generally the same and are spaced apart horizontally from each other for a relatively small distance i.e. 20cm alongside the parking position.

Each detector 200 is, in this particular embodiment, an infrared (IR) detector for detecting an obstacle and in particular the intrusion thereof into or across a specific area or zone in front of the detector 200. Its basic components include an emitter, a sensor located adjacent or next to the emitter, and an operating circuit controlling the operation of the emitter and sensor.

In operation, the emitter emits a beam of IR radiation generally at right angles across the parking position, and the sensor receives any radiation that is reflected back for example by an obstacle intercepting the IR beam. Under the control of the operating circuit, variation in certain parameters (e.g. intensity) of the reflected radiation (say compared to the original radiation) is being constantly sensed or monitored. If the variation exceeds a certain threshold then this is indicative of an object having an end crossing the beam or reaching that spot, otherwise the object falls short of reaching the spot.

The detectors 200 represent two spots A and B defining a short distance therebetween within which the intended parking position for a vehicle, in the direction of the two spots, can be determined with an acceptable degree of accuracy as required in practice. Accordingly, if a specific part of the vehicle moves in anywhere between the two spots A and B in the direction of the spots, the vehicle is considered to be parked in the right position in that direction. Given that the driver can often determine the correct lateral position of the vehicle, i.e. when driving it straight into the parking position ahead, there is practically no need for aiding in lateral positioning of the vehicle.

The indicator 300 has a series of three separate lights 310, 320 and 330 arranged vertically in the order given, which provide GO, STOP and REVERSE signals respectively to a driver of the vehicle. Whilst the GO and REVERSE lights 310 and 330 are green, the STOP light 320 is preferably coloured red for distinction as stopping the vehicle in the right place is the aim. The GO light 310 indicates that the vehicle should proceed forwards, while the REVERSE light 330 indicates that the driver should move the vehicle backwards as he/she has driven it beyond the intended parking position.

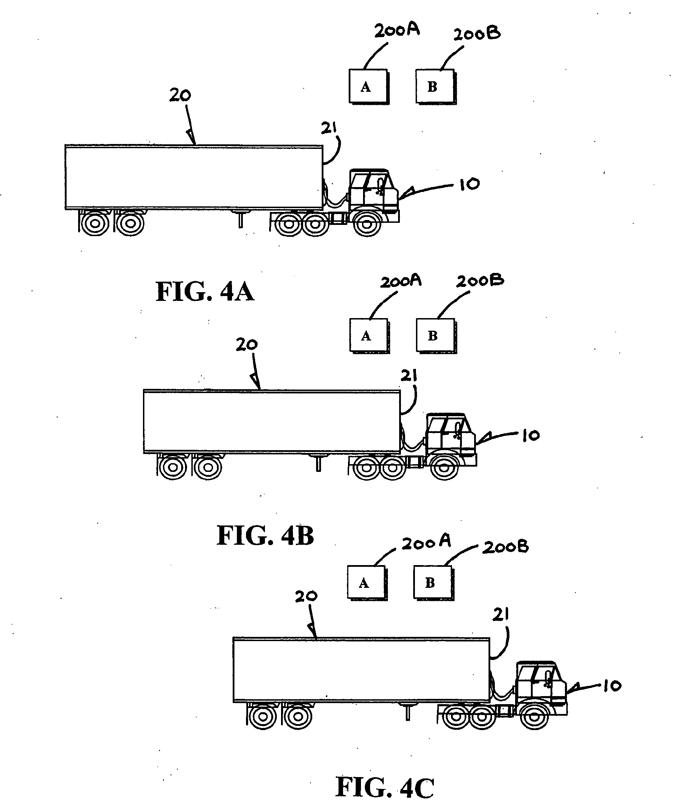

As shown in Figures 4A to 4C, in the case of the container truck 10 carrying the container 20 with a forward end 21, the forward end 21 is conveniently chosen as the reference part for detection by the detectors 200. In this case, the detectors 200 (i.e. the overall parking aid apparatus 100) should be placed at the front end of the parking position (for the container 20), with detector 200A being upstream (spot A) and detector 200B (spot B) downstream in the direction of movement of the truck 10.

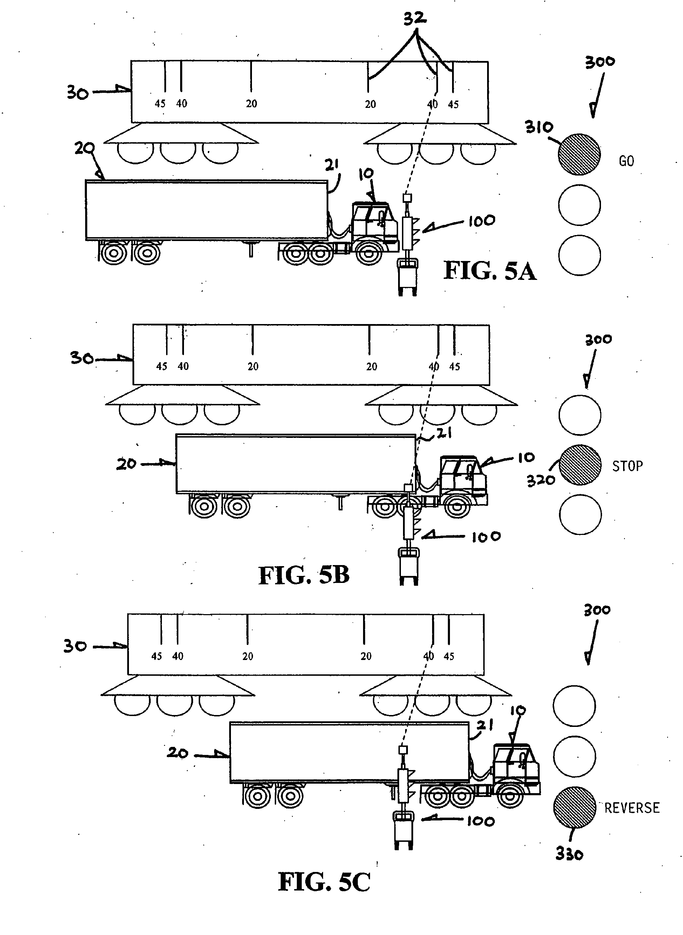

As shown in Figures 5A to 5C, the location of the parking aid apparatus 100 (i.e. the parking position) may conveniently be determined by reference to appropriate markings 32 provided on a leg structure 30 of the gantry crane. There are three pairs of such markings 32 for containers of various lengths i.e. twenty-feet, forty-feet and forty five-feet long, and each pair caters for parking in opposite directions. These markings 32 are predetermined according to the position of a load block 31 of the gantry crane (relative to the leg structure 30).

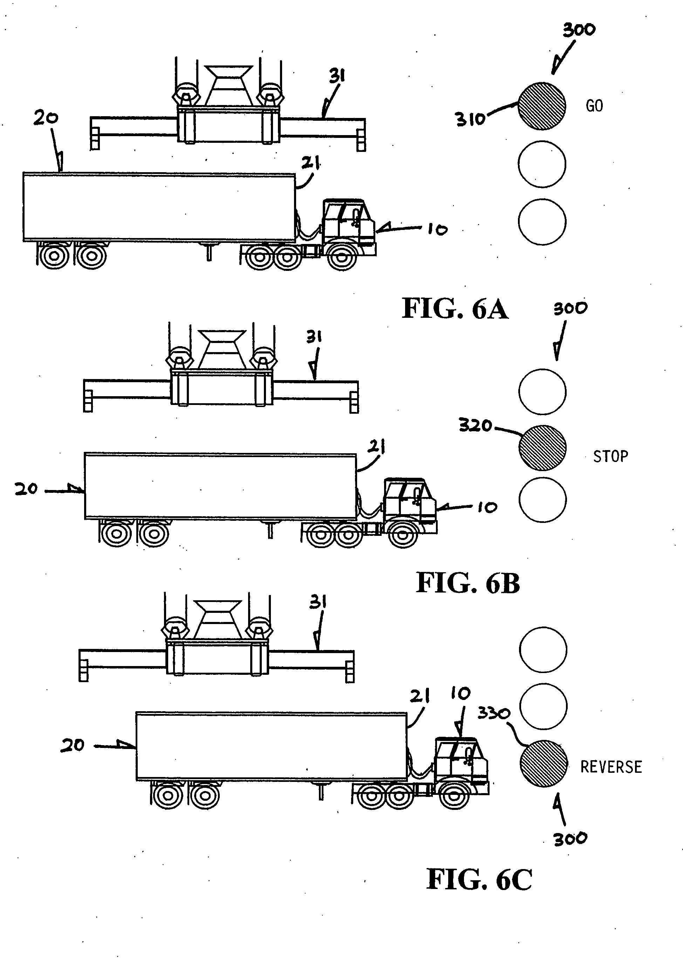

The operating circuit is configured to operate the indicator 300 in the following manner:
(a) Turn on the GO light 310 to provide a GO signal to the driver for moving the truck 10 forwards to the parking position when both the detectors 200A and 200B do not detect the forward end 21 of the container 20, i.e. their IR beams not being intercepted (Figures 5A and 6A).
(b) Turn on the STOP light 320 instead to provide a STOP signal to the driver for stopping the truck 10 when the upstream detector 200A detects the forward container end 21 while the downstream detector 200B fails to do so, i.e. upon the truck 10 reaching the intended parking position (Figures 5B and 6B).
(c) Turn on the REVERSE light 330 instead to provide a REVERSE signal to the driver for moving the truck 10 back to the parking position when both the detectors 200A and 200B detect the forward container end 21 or interception of radiation thereby, i.e. immediately when the truck 10 has gone too far (Figures 5C and 6C).

In the other situation where the semi-trailer truck 10 is to be loaded with a container 20 from the gantry crane, a suitable fixture at the front end of the trailer where the forward end 21 of the container 20 is going to be located may be used as reference for detection by the detectors 200. Such a fixture may be a headboard of the trailer, for which the detectors 200 may have to be adjusted to a lower position.

It is envisaged that any suitable types of detectors for detecting obstacles/objects in a contactless manner may be employed as an alternative to the IR detectors 200, such as those that operate using radar radiation or laser beams, or image sensors generally known in the art as range sensors that capture and work on object images without emitting any radiation. In a different aspect, the indicator 300 may provide audio signals (instead of visual signals) to the driver, such as beeps of different tones so that he/she can concentrate on manoeuvring the vehicle.

The invention has been given by way of example only, and various other modifications of and/or alterations to the described embodiment may be made by persons skilled in the art without departing from the scope of the invention as specified in the appended claims.

## Claims

1. Parking aid apparatus for aiding parking of a vehicle at a desired parking position, **characterized in that** the apparatus comprises:
first and second detectors for use at locations adjacent said parking position and spaced apart for a relatively small distance in the direction of movement of said vehicle, each detector being adapted to detect crossing by a part of or on said vehicle in a contactless manner; and
an indicator associated with the detectors for providing a stop signal to a driver of said vehicle for stopping said vehicle in response to only one of the two detectors detecting crossing of the part of said vehicle.

2. The parking aid apparatus as claimed in claim 1, **characterized in that** at least one of the detectors comprises an emitter for emitting radiation across said parking position and a sensor for receiving the radiation to sense variation therein caused by the part of said vehicle crossing and intercepting the radiation.

3. The parking aid apparatus as claimed in claim 2, **characterized in that** the sensor is located adjacent the detector for receiving the radiation intercepted and reflected back by said vehicle part.

4. The parking aid apparatus as claimed in any one of claims 1 to 3, **characterized in that** the first detector is located upstream of the second detector in the direction of movement of said vehicle, and the indicator is adapted to provide the stop signal when the first detector detects crossing of a forward part of said vehicle and the second detector detects no crossing of said forward part.

5. The parking aid apparatus as claimed in any one of claims 1 to 4, **characterized in that** the indicator is adapted to provide a go signal to said driver for driving said vehicle to said parking position when both the first and the second detectors detect no crossing of said vehicle part.

6. The parking aid apparatus as claimed in any one of claims 1 to 5, **characterized in that** the indicator is adapted to provide a reverse signal to said driver for driving said vehicle back to said parking position when both the first and the second detectors detect crossing of said vehicle part.

7. The parking aid apparatus as claimed in any one of claims 1 to 6, **characterized in that** the or each signal provided by the indicator is visual.

8. The parking aid apparatus as claimed in claim 7,
**characterized in that** the indicator comprises a or a separate light to provide the or each signal.

9. The parking aid apparatus as claimed in any one of claims 1 to 8, **characterized in that** the indicator is adapted to provide a go signal to said driver for driving said vehicle to said parking position when both the first and the second detectors detect no crossing of said vehicle part, and a reverse signal to said driver for driving said vehicle back to said parking position when both the first and the second detectors detect crossing of said vehicle part, and **characterized in that** the indicator comprises a series of lights to provide the go, stop and reverse signals respectively.

10. The parking aid apparatus as claimed in any one of claims 1 to 9, **characterized in that** the detectors are located by a single support.

11. The parking aid apparatus as claimed in any one of claims 1 to 10, **characterized in** including a body having a top part locating the detectors, a middle part locating the indicator and a base part for holding a battery for powering the detectors and the indicator.

12. The parking aid apparatus as claimed in claim 11, **characterized in that** the base part includes a plurality of rollers or wheels to facilitate movement of the overall apparatus to said parking position.

13. The parking aid apparatus as claimed in claim 11 or claim 12, **characterized in that** the top part is adjustable in height relative to the base part.
